(19) **Europäisches Patentamt**
**European Patent Office**
**Office européen des brevets**

(11) **EP 4 756 680 A1**

(12) # EUROPEAN PATENT APPLICATION

(43) Date of publication:
**10.06.2026 Bulletin 2026/24**

(21) Application number: **25213221.2**

(22) Date of filing: **04.11.2025**

(51) International Patent Classification (IPC):
*G06N 10/20* (2022.01)    *G06N 10/70* (2022.01)

(52) Cooperative Patent Classification (CPC):
**G06N 10/70; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.12.2024 JP 2024211954**

(71) Applicant: **FUJITSU LIMITED**
**Kawasaki-shi, Kanagawa 211-8588 (JP)**

(72) Inventor: **ISHII, Masatoshi**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, QUANTUM COMPUTATION SUPPORT METHOD, AND INFORMATION PROCESSING APPARATUS**

(57)    An information processing apparatus generates a second quantum circuit by converting a first two-qubit gate included in a first quantum circuit into a two-qubit gate sequence in which the gate operation of the first two-qubit gate is repeated a predetermined number of times consecutively. The information processing apparatus converts a second two-qubit gate, which forms a part of the two-qubit gate sequence included in the second quantum circuit, into a first equivalent circuit representing a gate operation with a first global phase. In addition, the information processing apparatus converts a third two-qubit gate, which forms a part of the two-qubit gate sequence, into a second equivalent circuit representing a gate operation with a second global phase. Thus, a third quantum circuit is generated. The information processing apparatus then causes a quantum computer to execute the third quantum circuit.

FIG. 1

EP 4 756 680 A1

**Description**

FIELD

The embodiments discussed herein relate to a computer program, a quantum computation support method, and an information processing apparatus.

BACKGROUND

Currently available quantum computers are of a type called noisy intermediate-scale quantum computers (NISQ), which use superconducting or trapped-ion qubits. These quantum devices have an error rate of approximately 1% and have approximately 10 to 100 qubits. Such small-scale quantum computers are not able to completely correct errors. Therefore, when quantum computations are performed on quantum computers, algorithms for reducing quantum errors, called quantum error suppression or mitigation, are applied.

In quantum computers, one-qubit gates and two-qubit gates are implemented as quantum gates for operating qubits. Quantum gates executable on quantum computers are called native gates. In existing NISQ devices, noise of two-qubit gates is approximately one order of magnitude higher than that of one-qubit gates. Therefore, two-qubit gates have a larger impact on measurement results than one-qubit gates.

One of the main types of noise that occur in quantum gate operations is over-rotation noise, which is referred to as coherent noise. Over-rotation noise is a noise component in which the rotation angle of a rotation gate is excessive or insufficient. Over-rotation noise always occurs during the gate operation of a rotation gate, and is different from noise components that occur stochastically.

In NISQ devices, over-rotations of gate rotation angles occur. Accordingly, coherent error that is caused due to implemented quantum gates occurs. Coherent error may be amplified depending on a combination of circuits or quantum states. Quantum error mitigation is performed to suppress the amplification of such error.

Zero-noise extrapolation (ZNE), for example, may be employed as a method for dealing with noise. ZNE is a technique in which extra quantum gates are inserted into a quantum circuit to amplify noise, and a noise-free state is estimated by extrapolation.

As a technique for dealing with quantum errors caused by noise, for example, a method for reducing errors with circuit gauge selection has been proposed. A control device that improves the performance of quantum error mitigation has also been proposed. A method capable of a simple but comprehensive diagnosis in diagnosing a physical quantum device has also been proposed. A technique for quantum error-correction in microwave integrated quantum circuits has also been proposed. Furthermore, a quantum error mitigation method combining randomized compiling (RC) and ZNE has also been proposed. RC is a technique for suppressing the maximization of coherent error by executing a plurality of equivalent circuits and averaging their measurement results. See, for example, the following literatures.

Japanese National Publication of International Patent Application No. 2023-501752
Japanese Laid-open Patent Publication No. 2024-1778
U.S. Patent Application Publication No. 2022/0197764
U.S. Patent No. 10852346
Tomochika Kurita, Hammam Qassim, Masatoshi Ishii, Hirotaka Oshima, Shintaro Sato, and Joseph Emerson, "Synergetic quantum error mitigation by randomized compiling and zero-noise extrapolation for the variational quantum eigensolver", Quantum, 2023-11-20, volume 7, page 1184

In a quantum computer, it is not easy to reduce noise, but it is easy to amplify noise. With regard to noise other than coherent noise, the noise may be monotonically increased by increasing the number of quantum gates that generate the noise. On the other hand, since coherent noise largely depends on the internal quantum state, the coherent noise does not necessarily increase monotonically even if the number of gates is increased. Therefore, due to the impact of coherent noise, it is difficult to amplify noise in proportion to the number of quantum gates. This causes, for example, a decrease in the calculation accuracy of a physical quantity (observable) using an extrapolation technique.

SUMMARY

In one aspect, the present disclosure is intended to enable the amplification of noise according to the number of quantum gates.

In one aspect, there is provided a computer program that causes a computer to perform a process including: generating a second quantum circuit by converting a first two-qubit gate included in a first quantum circuit into a two-qubit gate sequence in which a gate operation of the first two-qubit gate is repeated a predetermined number of times consecutively; generating a third quantum circuit by converting a second two-qubit gate, which forms a part of the two-qubit gate sequence included in the second quantum circuit, into a first equivalent circuit representing a gate operation with a first global phase and converting a third two-qubit gate, which is different from the second two-qubit gate and forms a part of the two-qubit gate sequence, into a second equivalent circuit representing a gate operation with a second global phase different from the first global phase; and causing a quantum computer to execute the third quantum circuit.

BRIEF DESCRIPTION OF DRAWINGS

FIG. 1 illustrates an example of a quantum computation support method according to a first embodiment;
FIG. 2 illustrates an example of a configuration of a quantum computing system;
FIG. 3 illustrates an example of hardware of a computer used in the present embodiment;
FIG. 4 illustrates an example of ZNE;
FIG. 5 illustrates an example of a Bloch sphere representing the state of a qubit;
FIG. 6 illustrates examples of a plurality of equivalent circuits of a CX gate, which differ in global phase;
FIG. 7 illustrates an example of a method for implementing an $R_{ZX}$ gate;
FIG. 8 illustrates an example of a method for converting a CX gate to cancel only coherent noise;
FIG. 9 illustrates an example of a method for implementing ZNE;
FIG. 10 illustrates an example of functions of a classical computer;
FIG. 11 is a flowchart illustrating an example procedure for quantum computation;
FIG. 12 illustrates an example of a method for implementing a plurality of quantum circuits having different numbers of consecutive CX gates;
FIG. 13 illustrates error occurrence patterns in the case where only over-rotation noise occurs;
FIG. 14 illustrates error occurrence patterns in the case where only relaxation noise occurs;
FIG. 15 illustrates error occurrence patterns in the case where both over-rotation noise and relaxation noise occur; and
FIG. 16 illustrates error occurrence patterns in the case where five CX gates are consecutive.

DESCRIPTION OF EMBODIMENTS

Hereinafter, embodiments will be described with reference to the drawings. A plurality of embodiments may be combined unless they exclude each other.

[First Embodiment]

A first embodiment relates to a quantum computation support method capable of implementing quantum computation in which the impact of coherent noise is reduced and noise other than coherent noise is amplified.

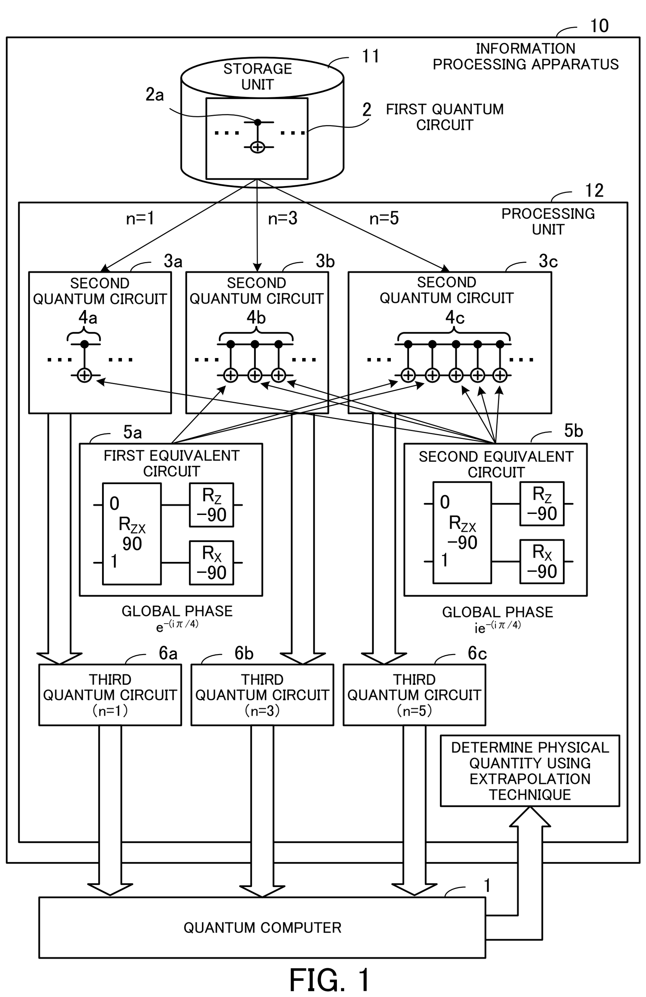

FIG. 1 illustrates an example of a quantum computation support method according to the first embodiment. FIG. 1 illustrates an information processing apparatus 10 for implementing the quantum computation support method. The information processing apparatus 10 is able to implement the quantum computation support method of the first embodiment by executing, for example, a quantum computation support program.
The information processing apparatus 10 includes a storage unit 11 and a processing unit 12. The storage unit 11 is, for example, a memory or a storage device included in the information processing apparatus 10. The processing unit 12 is, for example, a processor included in the information processing apparatus 10. The information processing apparatus 10 may include a plurality of processors. Among a plurality of processes performed by the information processing apparatus 10, a certain process and another process may be performed by different processors.
The storage unit 11 stores, for example, a first quantum circuit 2. The first quantum circuit 2 is information defining a gate operation procedure for obtaining a solution to a problem to be solved by quantum computation.
The processing unit 12 causes a quantum computer 1 to execute quantum computation based on the first quantum circuit 2. At this time, in order to reduce the impact of coherent noise and to monotonically amplify noise other than coherent noise, the processing unit 12 executes the following processing.
The processing unit 12 generates second quantum circuits 3a to 3c by converting a first two-qubit gate 2a included in the first quantum circuit 2 into two-qubit gate sequences 4a to 4c in which the gate operation of the first two-qubit gate 2a is repeated a predetermined number of times consecutively. The first two-qubit gate 2a is, for example, a controlled-NOT gate (CX gate). For example, the processing unit 12 generates the second quantum circuits 3a to 3c for a plurality of numerical values each indicating a predetermined number "n" of times for repeating the gate operation of the first two-qubit gate 2a. Here, n is an odd number greater than or equal to 1. In the example of FIG. 1, the plurality of numerical values each indicating the predetermined number "n" of times are set to "1, 3, and 5".

The processing unit 12 generates third quantum circuits 6a to 6c based on the second quantum circuits 3a to 3c, respectively. For example, with respect to each of the second quantum circuits 3a to 3c, the processing unit 12 converts a second two-qubit gate, which forms a part of the corresponding two-qubit gate sequence 4a to 4c, into a first equivalent circuit 5a representing a gate operation with a first global phase. The processing unit 12 also converts a third two-qubit gate, which is different from the second two-qubit gate and forms a part of the corresponding two-qubit gate sequence 4a to 4c, into a second equivalent circuit 5b. The second equivalent circuit 5b represents a gate operation with a second global phase different from the first global phase. The processing unit 12 performs the above conversion process, for example, for each of the plurality of numerical values indicating the predetermined number "n" of times for repeating the gate operation of the first two-qubit gate 2a. As a result, the third quantum circuits 6a to 6c are generated.

The processing unit 12 causes the quantum computer 1 to execute the generated third quantum circuits 6a to 6c. Then, for example, on the basis of the execution results of the third quantum circuits 6a to 6c by the quantum computer 1, the processing unit 12 determines a physical quantity (also referred to as an observable) in the absence of noise, using an extrapolation technique.

By implementing the above quantum computation support method, the quantum computer 1 performs quantum computation in which the impact of coherent noise (for example, over-rotation noise) is reduced and the impact of noise other than coherent noise (for example, relaxation noise) is increased. More specifically, a two-qubit gate is converted into a plurality of consecutive two-qubit gates, and the converted two-qubit gates are implemented by mixing equivalent circuits having different global phases, so that coherent noise is canceled. On the other hand, noise other than coherent noise increases with the number of consecutive two-qubit gates.

The impact of noise increases with the number of consecutive two-qubit gates. Therefore, by causing the quantum computer 1 to execute the plurality of third quantum circuits 6a to 6c, each having a different number of consecutive two-qubit gates, it is possible to obtain calculation results corresponding to monotonically increasing amounts of noise. Based on the measurement results obtained by the quantum computer 1, it is possible to determine the physical quantity in the absence of noise with high accuracy using the extrapolation technique.

That is, coherent noise largely depends on the internal quantum state and does not monotonically increase with the number of consecutive two-qubit gates. By contrast, noise other than coherent noise monotonically increases with the number of consecutive two-qubit gates. Therefore, quantum computation results are obtained in which the impact of coherent noise is suppressed and only noise other than coherent noise is monotonically increased, which results in an improvement in the calculation accuracy of a physical quantity using the extrapolation technique.

Further, the plurality of numerical values each indicating the predetermined number "n" of times for repeating the gate operation of the first two-qubit gate 2a is set to, for example, an odd number greater than or equal to 1. That is, an even number of CX gates are added to a state where a single CX gate exists. If noise is ignored, the gate operations of an even number of CX gates do not change the states of qubits before and after the operations. In the case where the first two-qubit gate 2a is a CX gate, for example, the repetitions of the gate operation of the CX gate increase the predetermined noise without changing the content of the quantum computation.

Here, in the case where the first quantum circuit 2 includes a two-qubit gate other than the CX gate, the processing unit 12 may convert the two-qubit gate into an equivalent circuit using the CX gate. Then, the processing unit 12 converts the CX gate included in the first quantum circuit 2 after the conversion, as the first two-qubit gate into a consecutively arranged CX gate sequence. With this, it becomes possible to appropriately increase or decrease noise in the execution of the entire first quantum circuit 2.

When generating the third quantum circuits 6a to 6c, the processing unit 12 converts, for example, the second two-qubit gate into the first equivalent circuit 5a using a first echoed cross-resonance (ECR) gate with rotation angle of 90 degrees. In addition, the processing unit 12 converts the third two-qubit gate into the second equivalent circuit 5b using a second ECR gate with rotation angle of -90 degrees. This makes it possible to execute the third quantum circuits 6a to 6c on many quantum computers 1 based on, for example, a superconducting platform.

In some cases, the quantum computer 1 is able to execute an ECR gate with rotation angle of 90 degrees but is unable to execute an ECR gate with rotation angle of -90 degrees. In such cases, the processing unit 12 configures the second ECR gate by using a third ECR gate with rotation angle of 90 degrees, which acts on two qubits, and Z gates arranged before and after the third ECR gate on each of the two qubits. This enables the execution of the third quantum circuits 6a to 6c even on the quantum computer 1 that is unable to execute the ECR gate of -90 degrees.

For example, in the case where the number of two-qubit gates in a two-qubit gate sequence is n (n is an odd number greater than or equal to 1) and the integer quotient obtained by dividing n by 2 is q (q is an integer greater than or equal to 0), the processing unit 12 converts each of q second two-qubit gates into the first equivalent circuit 5a. In this case, the processing unit 12 converts each of q+1 third two-qubit gates into the second equivalent circuit 5b. By doing so, the difference between the number of gates each implemented by the first equivalent circuit 5a and the number of gates each implemented by the second equivalent circuit 5b is minimized, so that coherent noise is reliably reduced.

[Second Embodiment]

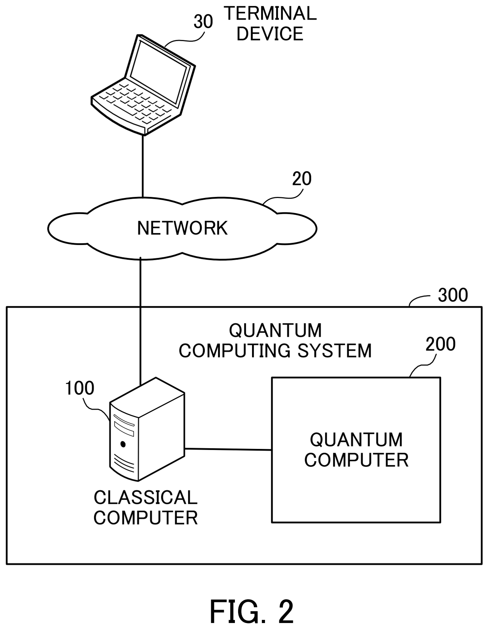

FIG. 2 illustrates an example of a configuration of a quantum computing system. A quantum computing system 300 is, for example, a computer system that performs computation using the principle of quantum mechanics. The quantum computing system 300 includes a classical computer 100 and a quantum computer 200. The classical computer 100 is a von Neumann computer. The quantum computer 200 is a non-von Neumann type, quantum gate-based computer that performs quantum computation by applying quantum gates to qubits.

A terminal device 30 is connected to the classical computer 100 via a network 20. The terminal device 30 is a computer that is used by a user who requests quantum computation to be performed by the quantum computing system 300. The classical computer 100 receives a quantum computation request including a quantum circuit from, for example, the terminal device 30. The quantum circuit is a quantum computation model that represents the order of gate operations on qubits by the arrangement of elements such as quantum gates. A qubit is a bit capable of representing a superposition state of a "0" state and a "1" state.

In accordance with the quantum computation request received from the terminal device 30, the classical computer 100 instructs the quantum computer 200 to perform gate operations on qubits. The classical computer 100 acquires a measurement result of each qubit from the quantum computer 200.

The quantum computer 200 performs gate operations on qubits in accordance with instructions from the classical computer 100. The quantum computer 200 measures the states of the qubits and transmits the measurement results to the classical computer 100.

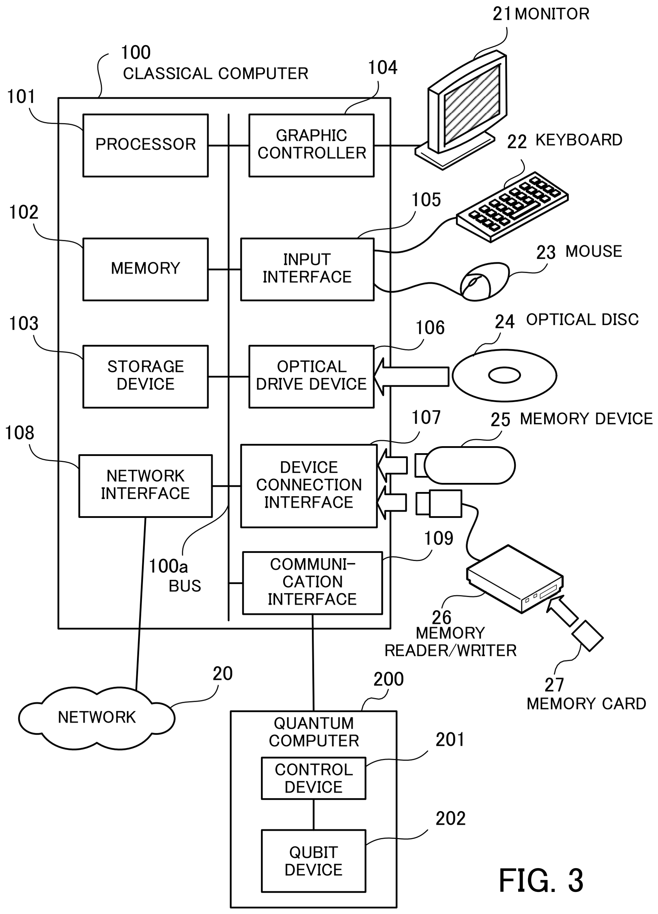

FIG. 3 illustrates an example of hardware of a computer used in the present embodiment. The classical computer 100 is entirely controlled by a processor 101. A memory 102 and a plurality of peripheral devices are connected to the processor 101 via a bus 100a.

The classical computer 100 may be a multiprocessor system including a plurality of processors. The set of processors in the multiprocessor system may be referred to as the processor 101. The processor 101 may be referred to as processor circuitry. Each of the plurality of processors is able to perform some or all of the plurality of processes that are performed by the classical computer 100. Two or more processes among a plurality of related processes may be performed by different processors.

The processor 101 is, for example, a central processing unit (CPU), a micro processing unit (MPU), or a digital signal processor (DSP). At least a part of the functions that are implemented by the processor 101 executing a program may be implemented by an electronic circuit such as an application specific integrated circuit (ASIC) or a programmable logic device (PLD).

The memory 102 is used as a main storage device of the classical computer 100. The memory 102 temporarily stores at least a part of operating system (OS) programs and application programs to be performed by the processor 101. The memory 102 also stores various data to be used by the processor 101 during its processing. As the memory 102, for example, a volatile semiconductor memory device such as a random access memory (RAM) is used.

The peripheral devices connected to the bus 100a include a storage device 103, a graphic controller 104, an input interface 105, an optical drive device 106, a device connection interface 107, a network interface 108, and a communication interface 109.

The storage device 103 electrically or magnetically writes and reads data to and from a built-in recording medium. The storage device 103 is used as an auxiliary storage device of the classical computer 100. The storage device 103 stores OS programs, application programs, and various data. As the storage device 103, for example, a hard disk drive (HDD) or a solid state drive (SSD) may be used.

The graphic controller 104 is an arithmetic device that performs image processing. The graphic controller 104 is, for example, a graphics processing unit (GPU). A monitor 21 is connected to the graphic controller 104. The graphic controller 104 displays images on the screen of the monitor 21 in accordance with instructions from the processor 101. Examples of the monitor 21 include a display device using organic electro luminescence (EL) and a liquid crystal display device. In the case where, for example, a GPU is used as the graphic controller 104, the graphic controller 104 is able to execute complicated numerical calculations such as matrix calculations.

A keyboard 22 and a mouse 23 are connected to the input interface 105. The input interface 105 transmits signals sent from the keyboard 22 and the mouse 23, to the processor 101. The mouse 23 is an example of a pointing device, and other pointing devices may be used. Examples of other pointing devices include a touch panel, a tablet, a touch pad, and a track ball.

The optical drive device 106 reads data recorded on an optical disc 24 or writes data to the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read only memory (CD-ROM), a CD-Recordable (CD-R), CD-rewritable (CD-RW), or the like.

The device connection interface 107 is a communication interface for connecting peripheral devices to the classical computer 100. For example, a memory device 25 and a memory reader/writer 26 may be connected to the device connection interface 107. The memory device 25 is a recording medium having a function of communicating with the device connection interface 107. The memory reader/writer 26 is a device that writes data to a memory card 27 or reads data from the memory card 27. The memory card 27 is a card-type recording medium.

The network interface 108 is connected to the network 20. The network interface 108 transmits and receives data to and from other computers or communication devices via the network 20. The network interface 108 is a wired communication interface connected to a wired communication device such as a switch or a router via a cable. Alternatively, the network interface 108 may be a wireless communication interface communicatively connected to a wireless communication device such as a base station or an access point by radio waves.

The communication interface 109 is connected to the quantum computer 200. The communication interface 109 communicates with the quantum computer 200. For example, the communication interface 109 transmits a quantum gate operation instruction based on the quantum circuit to the quantum computer 200. The communication interface 109 receives an execution result of the quantum circuit from the quantum computer 200.

The classical computer 100 is able to implement the processing functions of the second embodiment with the hardware as described above. The information processing apparatus 10 described in the first embodiment is also implemented with hardware similar to that of the classical computer 100 illustrated in FIG. 3.

The classical computer 100 implements the processing functions of the second embodiment by executing a program recorded on a computer-readable recording medium, for example. The program describing the processing contents to be executed by the classical computer 100 may be recorded on various recording media. For example, a program to be executed by the classical computer 100 may be stored in the storage device 103. The processor 101 loads at least a part of the program from the storage device 103 into the memory 102 and executes the program. The program to be executed by the classical computer 100 may be recorded on a portable recording medium such as the optical disc 24, the memory device 25, or the memory card 27. The program stored on the portable recording medium becomes executable after being installed in the storage device 103 under the control of the processor 101, for example. Alternatively, the processor 101 may read the program directly from the portable recording medium and execute the program.

The quantum computer 200 includes a control device 201 and a qubit device 202. The control device 201 performs gate operations on the qubits in the qubit device 202 in accordance with instructions from the classical computer 100. For example, the control device 201 performs gate operations on qubits by applying microwaves of a predetermined frequency to the qubits.

The qubit device 202 has a plurality of qubits. The qubit device has, for example, superconducting qubits, trapped-ion qubits, cold atom qubits, or the like. The qubit device 202 may also be referred to as a quantum processing unit (QPU).

A user who uses the quantum computing system 300 generates, for example, a quantum circuit for solving a problem to be solved through quantum computation, using the terminal device 30. When the user instructs the terminal device 30 to execute the quantum computation, the terminal device 30 transmits a quantum computation request including the generated quantum circuit to the quantum computing system 300.

In the quantum computing system 300, the classical computer 100 causes the quantum computer 200 to perform the quantum computation based on the quantum circuit in response to the quantum computation request. At this time, the classical computer 100 converts the quantum circuit to be executed, into a quantum circuit using executable quantum gates according to the hardware specifications of the quantum computer 200 (such as native gates specific to the qubit device).

In order to reduce the impact of noise, the quantum computing system 300 is able to employ, for example, ZNE, which employs extrapolation, in order to calculate a physical quantity from which the impact of noise has been removed, based on the physical quantity indicated in measurement results.

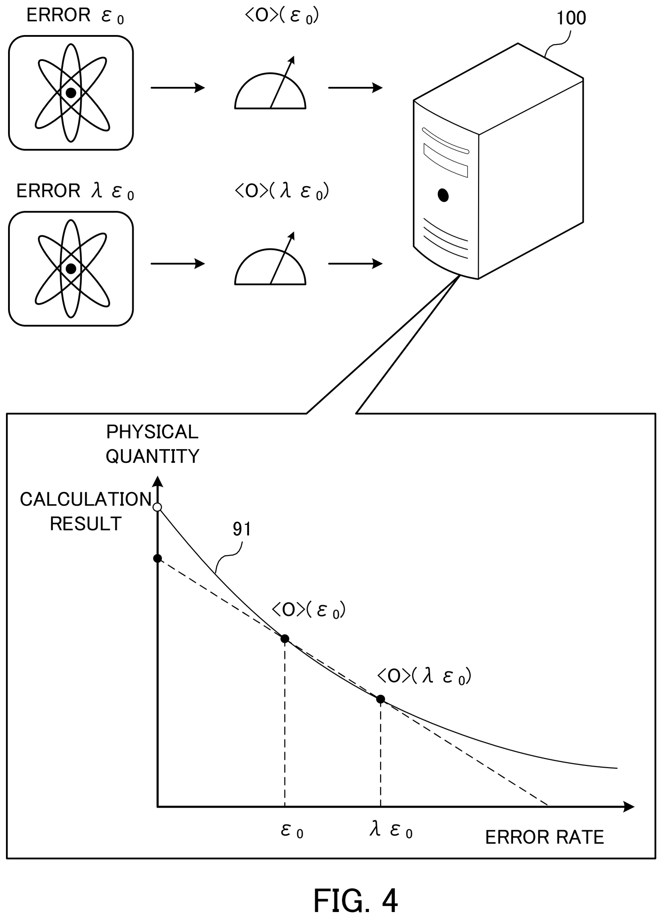

FIG. 4 illustrates an example of ZNE. In the quantum computer 200, it is difficult to reduce noise, but it is easy to amplify noise. For example, noise other than coherent noise (referred to as relaxation noise or decoherent noise) may be amplified by repeating the same quantum gate operation. Therefore, the classical computer 100 causes the quantum computer 200 to perform quantum computation a plurality of times, each with a different magnitude of noise, and obtains a physical quantity corresponding to each magnitude of noise from the measurement results of the quantum computation.

In the example of FIG. 4, the error rate (physical error rate) of errors generated in a first quantum computation by the quantum computer 200 is "$\varepsilon_0$". In this case, the physical quantity obtained from the measurement result is denoted by "$<O>(\varepsilon_0)$". The error rate of errors generated in a second quantum computation by the quantum computer 200 is "$\lambda\varepsilon_0$" ($\lambda$ is a real number greater than 1). In this case, the physical quantity obtained from the measurement result is denoted by "$<O>(\lambda\varepsilon_0)$".

The classical computer 100 calculates the physical quantity for the case where error is "0", using ZNE on the basis of a plurality of measurement results having different magnitudes of error. For example, the classical computer 100 calculates the physical quantity for the case where error is "0", using an extrapolation technique such as linear extrapolation, Richardson extrapolation, or exponential extrapolation.

For example, the classical computer 100 defines a function having the error rate as a variable and the physical quantity as a calculation result. The function includes a constant whose value is undetermined. The classical computer 100 determines the constant of the function such that a line 91 representing the function passes through the points indicating the physical quantity obtained for each error rate. Then, the classical computer 100 outputs a function value when the error rate, which is a variable of the function, is set to "0" as a calculation result indicating the physical quantity in the absence of noise.

In this way, it is possible to calculate the physical quantity in the absence of noise using ZNE. That is, if the noise generated in the quantum computation is only decoherent noise other than coherent noise, the physical quantity in the absence of noise is calculated using ZNE with high accuracy.

However, coherent noise largely depends on the internal quantum state, and the magnitude of the coherent noise does not increase in proportion to the number of quantum gates. Moreover, coherent noise always occurs during quantum gate operations. Therefore, coherent noise is a factor of deteriorating the calculation accuracy of ZNE.

To deal with this, in the quantum computing system 300, the gate operation of a CX gate in a quantum circuit to be executed is implemented by a combination of equivalent circuits having different global phases, thereby canceling over-rotation noise, which is typical coherent noise.

The global phase is one of the parameters representing a superposition state of $|0\rangle$ and $|1\rangle$ for a qubit. The state of a qubit is often visualized by a Bloch sphere.

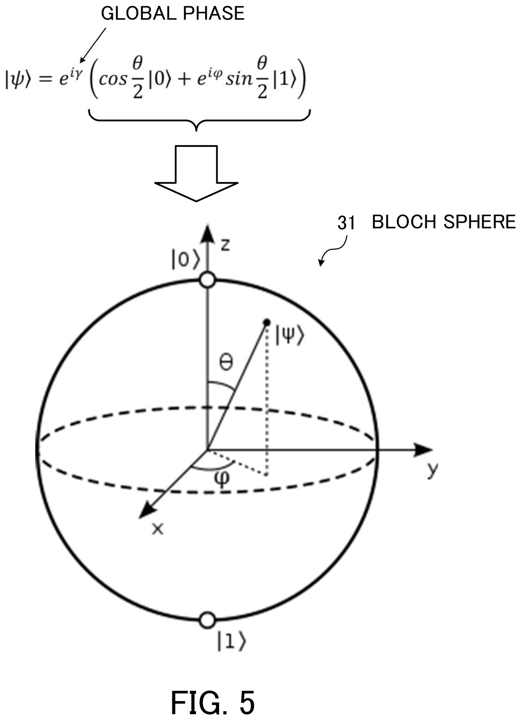

FIG. 5 illustrates an example of a Bloch sphere representing the state of a qubit. The state $|\Psi\rangle$ of the qubit is expressed by the following Formula (1).

$$|\psi\rangle = e^{i\gamma} \left( cos \frac{\theta}{2} |0\rangle + e^{i\varphi} sin \frac{\theta}{2} |1\rangle \right) \qquad (1)$$

In Formula (1), $\theta$, $\varphi$, and $\gamma$ are real-valued parameters. The coefficient "$e^{i\gamma}$" on the right-hand side of Formula (1) is the global phase. When the state $|\psi\rangle$ of the qubit is represented on a Bloch sphere 31, the value inside the parentheses on the right-hand side of Formula (1) is visualized using $\theta$ and $\varphi$. However, the Bloch sphere 31 is not able to represent the global phase.

When the state of a qubit is measured, the global phase is usually ignored. That is, in each measurement of the quantum state $|\Psi\rangle$, either $|0\rangle$ or $|1\rangle$ is observed stochastically. By determining the occurrence probabilities of $|0\rangle$ and $|1\rangle$, the state of the qubit is accurately obtained. The global phase, which is a coefficient by which the entire right-hand side of Formula (1) is multiplied, does not affect the occurrence probabilities of $|0\rangle$ and $|1\rangle$. Therefore, it is possible to ignore the global phase in quantum computation in which noise is not taken into account.

In the case where the impact of noise is taken into account, the global phase may be set appropriately to cancel or amplify noise. For example, for a CX gate, there are a plurality of equivalent circuits that are logically equivalent to each other but differ in global phase. By combining a plurality of equivalent circuits with different global phases, for example, it becomes possible to reduce coherent noise while increasing decoherent noise other than coherent noise.

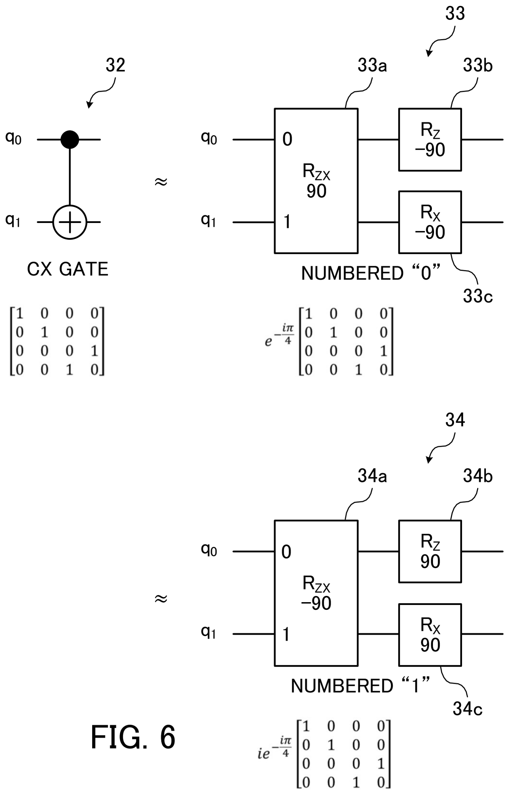

FIG. 6 illustrates examples of a plurality of equivalent circuits of a CX gate, which differ in global phase. A matrix representing the gate operation of a CX gate 32 is given as follows:

$$\begin{bmatrix} 1 & 0 & 0 & 0 \\ 0 & 1 & 0 & 0 \\ 0 & 0 & 0 & 1 \\ 0 & 0 & 1 & 0 \end{bmatrix} \qquad (2)$$

The CX gate 32 may be converted into a plurality of equivalent circuits 33 and 34 using $R_{ZX}$ gates. The $R_{ZX}$ gates may also be referred to as echoed cross-resonance (ECR) gates. $R_{ZX}$ gates are typically used as entanglement gates in superconducting devices.

In the equivalent circuit 33, an $R_{ZX}$ gate 33a with rotation angle of "90", which acts on the control qubit "$q_0$" and the target qubit "$q_1$" of the CX gate 32, is arranged. Next, in the equivalent circuit 33, an $R_Z$ gate 33b ($R_Z(-90)$) with rotation angle of "-90", which acts on "$q_0$", and an $R_X$ gate 33c ($R_X(-90)$) with rotation angle of "-90", which acts on "$q_1$", are arranged. The $R_Z$ gate 33b is a quantum gate that applies a rotation of -90 degrees around the Z axis, and the $R_X$ gate 33c is a quantum gate that applies a rotation of -90 degrees around the X axis.

In the equivalent circuit 34, an $R_{ZX}$ gate 34a with rotation angle of "-90", which acts on the control qubit "$q_0$" and the target qubit "$q_1$" of the CX gate 32, is arranged. Next, in the equivalent circuit 34, an $R_Z$ gate 34b ($R_Z(90)$) with rotation angle of "90", which acts on "$q_0$", and an $R_X$ gate 34c ($R_X(90)$) with rotation angle of "90", which acts on "$q_1$", are arranged. The $R_Z$ gate 34b is a quantum gate that applies a rotation of 90 degrees around the Z-axis, and the $R_X$ gate 34c is a quantum gate that applies a rotation of 90 degrees around the X-axis.

Here, the gate operations implemented by the equivalent circuit 33 are expressed by the following Formula (3).

$$e^{-\frac{i\pi}{4}}\begin{bmatrix} 1 & 0 & 0 & 0 \\ 0 & 1 & 0 & 0 \\ 0 & 0 & 0 & 1 \\ 0 & 0 & 1 & 0 \end{bmatrix} \tag{3}$$

The gate operations implemented by the equivalent circuit 34 are expressed by the following Formula (4).

$$ie^{-\frac{i\pi}{4}}\begin{bmatrix} 1 & 0 & 0 & 0 \\ 0 & 1 & 0 & 0 \\ 0 & 0 & 0 & 1 \\ 0 & 0 & 1 & 0 \end{bmatrix} \tag{4}$$

"$e^{-(i\pi/4)}$" in Formula (3) and "$ie^{-(i\pi/4)}$" in Formula (4) correspond to global phases. Thus, the two equivalent circuits 33 and 34 of the CX gate 32 have different global phases.

The gate operation of an $R_{ZX}$ gate is expressed by the following Formula (5), where $\theta$ denotes a rotation angle.

$$R_{ZX}(\theta) = \begin{bmatrix} \cos\left(\frac{\theta}{2}\right) & -i\sin\left(\frac{\theta}{2}\right) & 0 & 0 \\ -i\sin\left(\frac{\theta}{2}\right) & \cos\left(\frac{\theta}{2}\right) & 0 & 0 \\ 0 & 0 & \cos\left(\frac{\theta}{2}\right) & i\sin\left(\frac{\theta}{2}\right) \\ 0 & 0 & i\sin\left(\frac{\theta}{2}\right) & \cos\left(\frac{\theta}{2}\right) \end{bmatrix} \tag{5}$$

Many superconducting devices are able to implement the $R_{ZX}$ gate "$R_{ZX}(90)$" with rotation angle of "90" as a native gate, but are unable to implement the $R_{ZX}$ gate "$R_{ZX}(-90)$" with rotation angle of "-90". To deal with this, $R_{ZX}(-90)$ is implemented by being converted to an equivalent circuit using $R_{ZX}(90)$.

Hereinafter, the equivalent circuit 33 formed of $R_{ZX}(90)$, $R_Z(-90)$, and $R_X(-90)$ is referred to as an equivalent circuit numbered "0". The equivalent circuit 34 formed of $R_{ZX}(-90)$, $R_Z(90)$, and $R_X(90)$ is referred to as an equivalent circuit numbered "1".

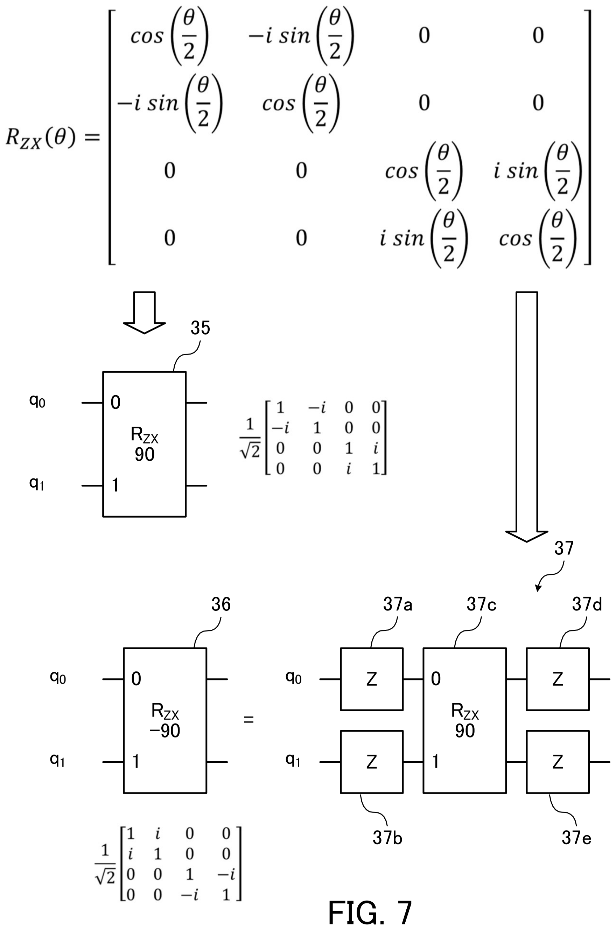

FIG. 7 illustrates an example of a method for implementing an $R_{ZX}$ gate. An $R_{ZX}$ gate 35 with rotation angle of "90" is executed as it is by the quantum computer 200. The gate operation of the $R_{ZX}$ gate 35 is expressed by the following Formula (6).

$$\frac{1}{\sqrt{2}}\begin{bmatrix} 1 & -i & 0 & 0 \\ -i & 1 & 0 & 0 \\ 0 & 0 & 1 & i \\ 0 & 0 & i & 1 \end{bmatrix} \tag{6}$$

An $R_{ZX}$ gate 36 with rotation angle of "-90" is converted into an equivalent circuit 37, which is then executed by the quantum computer 200. In the equivalent circuit 37, first, Z gates 37a and 37b are arranged on two qubits, respectively. Next, an $R_{ZX}$ gate 37c with rotation angle of "90" is arranged. Further, Z gates 37d and 37e are arranged on the two qubits, respectively. The gate operation of the $R_{ZX}$ gate 36 (the same applies to the equivalent circuit 37) is expressed by the following Formula (7).

$$\frac{1}{\sqrt{2}} \begin{bmatrix} 1 & i & 0 & 0 \\ i & 1 & 0 & 0 \\ 0 & 0 & 1 & -i \\ 0 & 0 & -i & 1 \end{bmatrix} \qquad (7)$$

By using the $R_{ZX}$ gates as described above, the plurality of equivalent circuits 33 and 34 having different global phases are generated for the CX gate.

When the gate operation of the CX gate is performed on two qubits twice consecutively, the states of the qubits return to their original states. Therefore, in the case where a quantum circuit includes a single CX gate, replacing that CX gate with three consecutive CX gates results in the same effect on the qubits in the case where noise is not taken into account. However, the magnitude of noise differs between the gate operation of one CX gate and the gate operations of three CX gates.

The magnitude of noise is adjusted by replacing each of the consecutive CX gates with the equivalent circuit numbered "0" or the equivalent circuit numbered "1". For example, in the case of amplifying decoherent noise while suppressing coherent noise, the consecutive CX gates may be implemented by combining the equivalent circuits numbered "0" and "1".

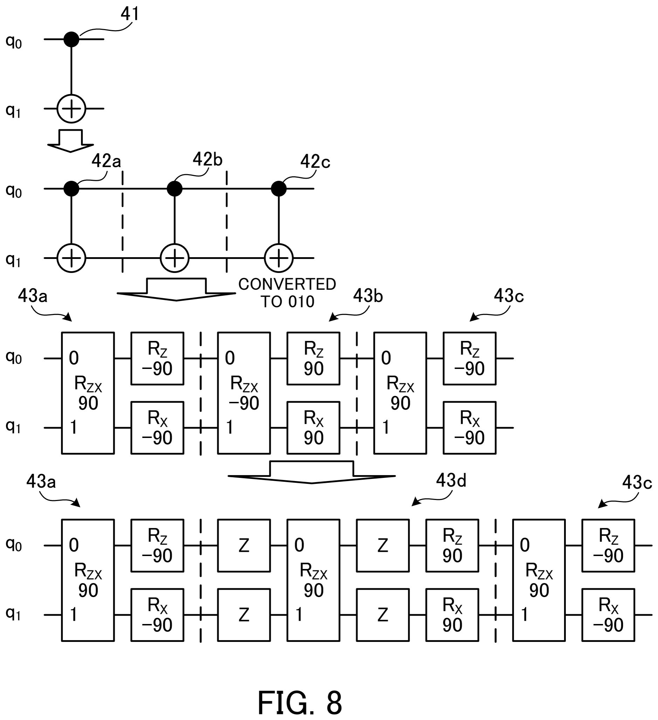

FIG. 8 illustrates an example of a method for converting a CX gate to cancel only coherent noise. For example, in the case where a quantum circuit to be executed includes a single CX gate 41, the classical computer 100 converts that CX gate 41 into three consecutive CX gates 42a to 42c. The classical computer 100 further converts the three CX gates 42a to 42c into a circuit in which equivalent circuits having different global phases are combined. Referring to the example of FIG. 8, the CX gates 42a to 42c are converted into equivalent circuits 43a to 43c numbered "0", "1", and "0", respectively. Hereinafter, such a sequence of equivalent circuits is represented by the number sequence "010" of the equivalent circuits.

The equivalent circuit 43b numbered "1" includes an $R_{ZX}(-90)$ gate. Therefore, the classical computer 100 further converts the equivalent circuit 43b into an equivalent circuit 43d using an $R_{ZX}(90)$ gate.

In the example of FIG. 8, the single CX gate 41 is converted into three CX gates 42a to 42c. However, the number of CX gates is increased to five, seven, or more. As the number of CX gates increases, decoherent noise increases. On the other hand, by mixing gate operations having different global phases, most of coherent noise is canceled. Since coherent noise is suppressed in this manner, the calculation accuracy of ZNE is improved.

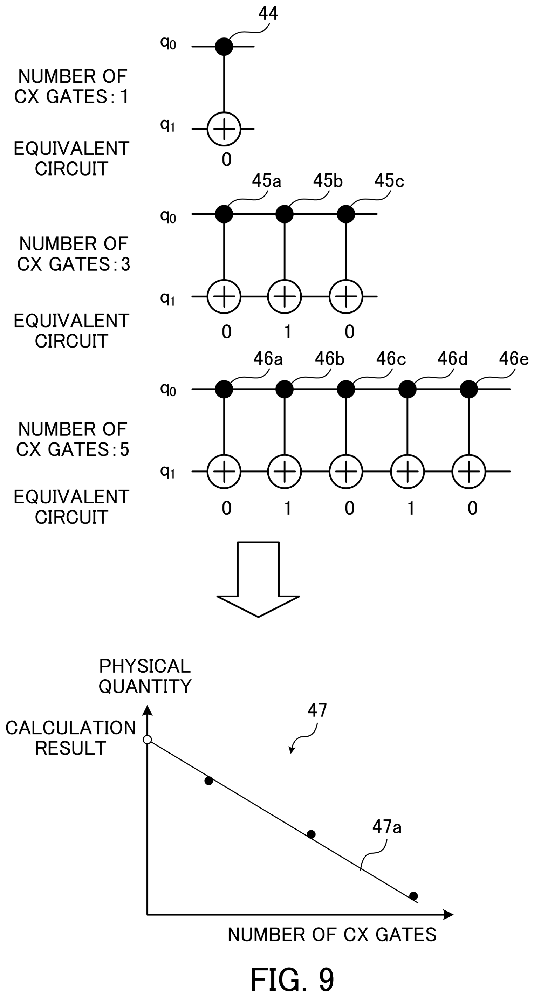

FIG. 9 illustrates an example of a method for implementing ZNE. For example, it is assumed that the classical computer 100 determines that the number of CX gates included in a quantum circuit is set to "1, 3, and 5". In this case, the classical computer 100 first converts a CX gate 44 included in a quantum circuit to an equivalent circuit using an $R_{ZX}$ gate (for example, the equivalent circuit numbered "0"), and causes the quantum computer 200 to execute the quantum circuit.

Next, the classical computer 100 converts the CX gate 44 of the quantum circuit into three CX gates 45a to 45c. The classical computer 100 then converts each of the CX gates 45a to 45c into an equivalent circuit using an $R_{ZX}$ gate. In doing so, the classical computer 100 combines equivalent circuits having different global phases. Referring to the example of FIG. 9, two CX gates 45a and 45c are each converted into the equivalent circuit numbered "0", and one CX gate 45b is converted into the equivalent circuit numbered "1". Then, the classical computer 100 causes the quantum computer 200 to execute the quantum circuit obtained by replacing the CX gates 45a to 45c with the equivalent circuits.

Next, the classical computer 100 converts the CX gate 44 of the quantum circuit into five CX gates 46a to 46e. The classical computer 100 then converts each of the CX gates 46a to 46e into an equivalent circuit using an $R_{ZX}$ gate. In doing so, the classical computer 100 combines equivalent circuits having different global phases. Referring to the example of FIG. 9, three CX gates 46a, 46c, and 46e are each converted into the equivalent circuit numbered "0", and two CX gates 46b and 46d are each converted into the equivalent circuit numbered "1". Then, the classical computer 100 causes the quantum computer 200 to execute the quantum circuit obtained by replacing the CX gates 46a to 46e with the equivalent circuits.

In the case of implementing a single CX gate, the impact of decoherent noise is greater when using three CX gates than when using one CX gate, but the impact of coherent noise is less. Similarly, in the case of implementing a single CX gate, the impact of decoherent noise is greater when using five CX gates than when using three CX gates, but the impact of coherent noise is less. As a result, the physical quantity obtained from a result of executing the quantum circuit has an error due to the impact of decoherent noise. Therefore, the classical computer 100 calculates the physical quantity in the absence of noise using an extrapolation technique, based on the physical quantity obtained from the results of repeatedly executing quantum computation a plurality of times with different numbers of CX gates.

For example, a graph 47 has the number of CX gates on the horizontal axis and the physical quantity on the vertical axis. By plotting points corresponding to the calculation results for the different numbers of CX gates on the graph 47, a line 47a passing near these points is obtained. The classical computer 100 obtains a function representing the line 47a. For example, in the case where noise increases in proportion to the number of CX gates, the value of the function when the number of CX gates is "0" is taken as a result of calculating the physical quantity in the absence of noise.

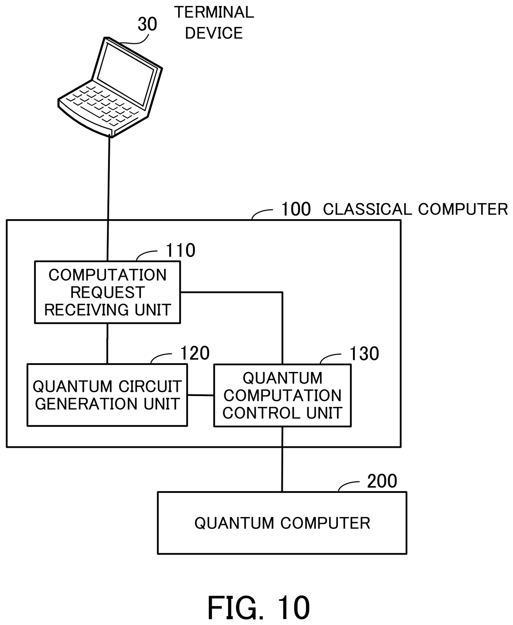

FIG. 10 illustrates an example of functions of the classical computer. The classical computer 100 includes a computation request receiving unit 110, a quantum circuit generation unit 120, and a quantum computation control unit 130.

The computation request receiving unit 110 receives a computation request for quantum computation from the terminal device 30. The computation request receiving unit 110 requests the quantum circuit generation unit 120 to generate a quantum circuit corresponding to the specified quantum computation. Upon receiving a computation result from the quantum computation control unit 130, the computation request receiving unit 110 transmits the computation result to the terminal device 30 that is the sender of the computation request.

The quantum circuit generation unit 120 generates a quantum circuit for executing the quantum computation specified by the computation request receiving unit 110. For example, in the case where no quantum circuit is included in a quantum computation request, the quantum circuit generation unit 120 generates a quantum circuit based on the information indicated in the quantum computation request, allowing use of quantum gates other than native gates.

Then, the quantum circuit generation unit 120 converts the quantum circuit included in the quantum computation request or the quantum circuit generated in response to the quantum computation request, into a quantum circuit using native gates. For example, the quantum circuit generation unit 120 converts a two-qubit gate included in the quantum circuit into an equivalent circuit using a CX gate. Further, the quantum circuit generation unit 120 determines a numerical sequence of numerical values each indicating the number of CX gates to be included in the quantum circuit for implementation of the two-qubit gate. Then, the quantum circuit generation unit 120 generates a plurality of quantum circuits using $R_{ZX}$ gates, which respectively correspond to the numbers of CX gates indicated by the numerical values of the determined numerical sequence. The quantum circuit generation unit 120 sequentially transmits the plurality of generated quantum circuits to the quantum computation control unit 130.

The quantum computation control unit 130 instructs the quantum computer 200 to perform gate operations on qubits according to each of the plurality of quantum circuits received from the quantum circuit generation unit 120. The quantum computation control unit 130 receives a result of measuring the states of the qubits from the quantum computer 200 every time the gate operations based on a quantum circuit are completed. The quantum computation control unit 130 calculates a solution to the problem to be solved, from the measurement results obtained from the plurality of quantum circuits. For example, the quantum computation control unit 130 calculates a physical quantity in the absence of noise using ZNE, based on the calculation results of the physical quantity based on the plurality of quantum circuits having different numbers of CX gates. Then, based on the calculation result, the quantum computation control unit 130 calculates a solution to the problem to be solved. The quantum computation control unit 130 transmits the obtained solution to the computation request receiving unit 110.

The function of each element illustrated in FIG. 10 may be implemented by causing a computer to execute a program module corresponding to the element, for example.

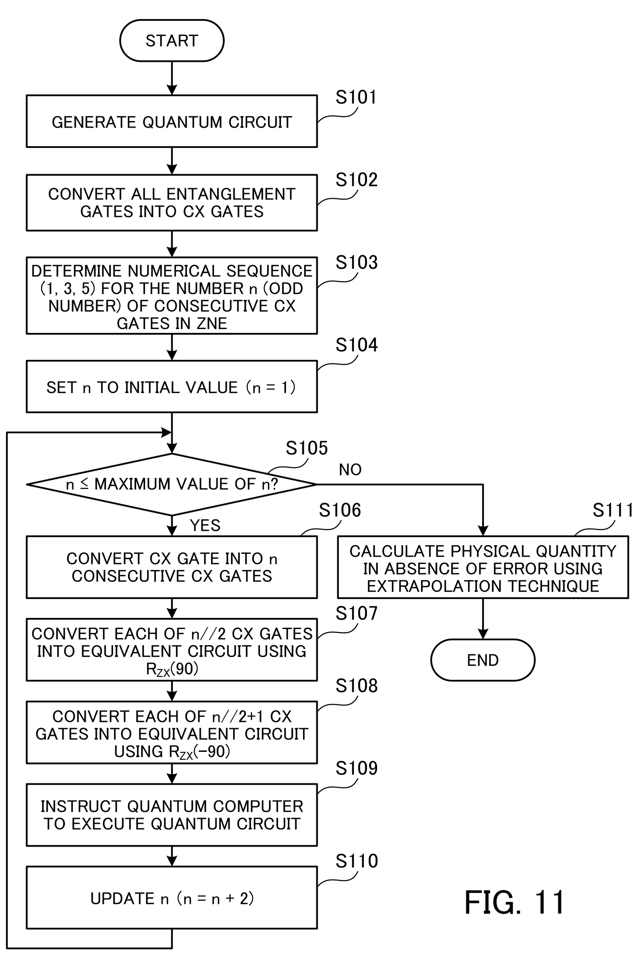

FIG. 11 is a flowchart illustrating an example procedure for quantum computation. Hereinafter, the process illustrated in FIG. 11 will be described in order of step numbers.

[Step S101] The computation request receiving unit 110 receives a quantum computation request from the terminal device 30. Then, the computation request receiving unit 110 instructs the quantum circuit generation unit 120 to generate a quantum circuit. In response to the instruction, the quantum circuit generation unit 120 generates a quantum circuit corresponding to a problem to be solved. The quantum circuit generated at this time is allowed to include quantum gates other than native gates. In the case where a quantum circuit is included in the quantum computation request, the quantum circuit generation unit 120 acquires the quantum circuit.

[Step S102] The quantum circuit generation unit 120 converts all entanglement gates (two-qubit gates) into equivalent circuits using CX gates.

[Step S103] The quantum circuit generation unit 120 determines a numerical sequence for the number n (n is an odd number greater than or equal to 1) of consecutive CX gates in ZNE. For example, the quantum circuit generation unit 120 determines {n = 1, 3, 5}.

[Step S104] The quantum circuit generation unit 120 sets n to an initial value "1" (n = 1).

[Step S105] The quantum circuit generation unit 120 determines whether the value of n is less than or equal to the maximum value ("5" in the example of FIG. 11) of the numerical sequence determined for n in step S103. If the value of n is less than or equal to the maximum value, the quantum circuit generation unit 120 advances the process to step S106. If the value of n exceeds the maximum value, the quantum circuit generation unit 120 advances the process to step S111.

[Step S106] The quantum circuit generation unit 120 converts each CX gate included in the quantum circuit into n consecutive CX gates.

[Step S107] The quantum circuit generation unit 120 converts each of "n//2" CX gates among the n consecutive CX gates into an equivalent circuit using an $R_{ZX}$ gate ($R_{ZX}(90)$) with rotation angle of "90" ("//" refers to round-down division).

[Step S108] The quantum circuit generation unit 120 converts each of "n//2 + 1" CX gates among the n consecutive CX gates into an equivalent circuit using an $R_{ZX}$ gate ($R_{ZX}(-90)$) with rotation angle of "-90". Thereafter, the quantum circuit generation unit 120 transmits the generated quantum circuit to the quantum computation control unit 130.

[Step S109] The quantum computation control unit 130 instructs the quantum computer 200 to execute the generated quantum circuit. The quantum computer 200 executes the quantum circuit according to the instruction, and transmits the measurement result of qubits to the quantum computation control unit 130. The quantum computation control unit 130 calculates a predetermined physical quantity based on the measurement result received from the quantum computer 200.

[Step S110] The quantum circuit generation unit 120 updates the value of n. For example, the quantum circuit generation unit 120 adds "2" to n (n = n + 2). Thereafter, the quantum circuit generation unit 120 advances the process to step S105.

[Step S111] The quantum computation control unit 130 calculates a physical quantity in the absence of error using the extrapolation technique, based on the numbers of consecutive CX gates and their corresponding physical quantity.

In the manner described above, it is possible to perform calculation with high accuracy using ZNE. More specifically, after a CX gate is replaced with a plurality of consecutive CX gates, the consecutive CX gates are implemented by equivalent circuits with different global phases. As a result, the impact of coherent noise, which does not necessarily increase with an increase in the number of quantum gates, is reduced, and only the impact of decoherent noise, which increases with an increase in the number of quantum gates, remains. As a result, it becomes possible to calculate the physical quantity using ZNE without being affected by the coherent noise, which leads to an improvement in the calculation accuracy.

In the process of FIG. 11, "n//2" CX gates among the consecutive CX gates are each implemented by an equivalent circuit (the equivalent circuit numbered "0") using an $R_{ZX}$ gate with rotation angle of "90". In addition, "n//2 + 1" CX gates among the consecutive CX gates are each implemented by an equivalent circuit (the equivalent circuit numbered "1") using an $R_{ZX}$ gate with rotation angle of "-90". As a result, the difference between the number of equivalent circuits numbered "0" and the number of equivalent circuits numbered "1" in the consecutive CX gates becomes the minimum "1".

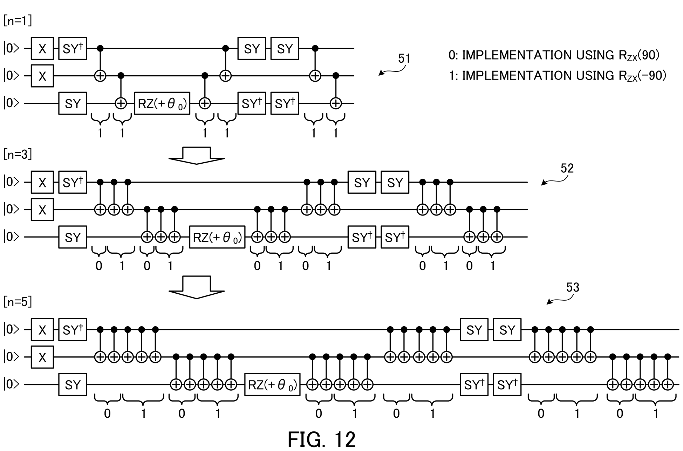

FIG. 12 illustrates an example of a method for implementing a plurality of quantum circuits having different numbers of consecutive CX gates. FIG. 12 illustrates an example in which energy in a variational quantum eigensolver (VQE) is calculated with high accuracy using ZNE.

A quantum circuit 51 for the VQE calculation includes six CX gates. According to the process of FIG. 11, in the case of "n = 1", each CX gate in the quantum circuit 51 is implemented by an equivalent circuit using an $R_{ZX}$ gate with rotation angle of "-90" (the equivalent circuit numbered "1").

In the case of "n = 3", a quantum circuit 52 is generated in which each CX gate in the quantum circuit 51 has been converted into three consecutive CX gates. Then, in the quantum circuit 52, one CX gate among the three consecutive CX gates is implemented by an equivalent circuit using an $R_{ZX}$ gate with rotation angle of "90" (the equivalent circuit numbered "0"). The remaining two CX gates among the three consecutive CX gates are each implemented by an equivalent circuit using an $R_{ZX}$ gate with rotation angle of "-90" (the equivalent circuit numbered "1").

In the case of "n = 5", a quantum circuit 53 is generated in which each CX gate in the quantum circuit 51 is converted into five consecutive CX gates. Then, in the quantum circuit 53, two CX gates among the five consecutive CX gates are each implemented by an equivalent circuit using an $R_{ZX}$ gate with rotation angle of "90" (the equivalent circuit numbered "0"). The remaining three CX gates among the five consecutive CX gates are each implemented by an equivalent circuit using an $R_{ZX}$ gate with rotation angle of "-90" (the equivalent circuit numbered "1").

In this way, by minimizing the difference between the number of CX gates implemented by the equivalent circuits numbered "0" and the number of CX gates implemented by the equivalent circuits numbered "1", coherent noises corresponding to rotation directions are canceled. As a result, the impact of the coherent noises is significantly reduced.

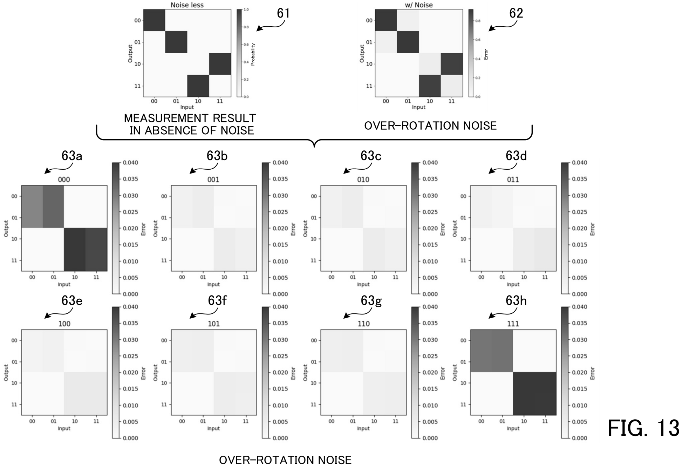

The following describes, with reference to FIGS. 13 to 16, simulation results regarding the occurrence of errors for each type of noise generated in the gate operations of consecutive CX gates.

FIG. 13 illustrates error occurrence patterns in the case where only over-rotation noise occurs. A table 61 represents the relationship between the input and output of a CX gate in the absence of noise. In the table 61, the horizontal axis represents the input states (100), $|01\rangle$, $|10\rangle$, $|11\rangle$) of the CX gate, and the vertical axis represents the output states (100), $|01\rangle$, 110), $|11\rangle$) of the CX gate. In the table 61, a darker region indicates a higher probability that the output state corresponding to that region is obtained in response to the input state corresponds to that region.

A table 62 represents the magnitude of error in the case where over-rotation noise occurs. In the table 62, the horizontal axis represents the input states of a CX gate, and the vertical axis represents the output states of the CX gate. In the table 62, a darker region indicates a greater error in the case where the output state corresponding to that region is obtained in response to the input state corresponding to that region.

Tables 63a to 63h represent the magnitudes of error after the gate operations of three consecutive CX gates in the case where the error represented in the table 62 occur in each of the CX gates. In the tables 63a to 63h, the horizontal axis represents the input states of the CX gates, and the vertical axis represents the output states of the CX gates. In the tables 63a to 63h, a darker region indicates a greater error in the case where the output state corresponding to that region is obtained in response to the input state corresponding to that region.

The table 63a is an example in which all the three consecutive CX gates are each implemented by the equivalent circuit numbered "0". The table 63b is an example in which the first two of the three consecutive CX gates are each implemented by the equivalent circuit numbered "0" and the last one is implemented by the equivalent circuit numbered "1". The table 63c is an example in which the first and last ones of the three consecutive CX gates are each implemented by the equivalent circuit numbered "0" and the middle one is implemented by the equivalent circuit numbered "1". The table 63d is an example in which the first one of the three consecutive CX gates is implemented by the equivalent circuit numbered "0" and the last two are each implemented by the equivalent circuit numbered "1". The table 63e is an example in which the last two of the three consecutive CX gates are each implemented by the equivalent circuit numbered "0" and the first one is implemented by the equivalent circuit numbered "1". The table 63f is an example in which the middle one of the three consecutive CX gates is implemented by the equivalent circuit numbered "0" and the first and last ones are each implemented by the equivalent circuit numbered "1". The table 63g is an example in which the last one of the three consecutive CX gates is implemented by the equivalent circuit numbered "0" and the first two are each implemented by the equivalent circuit numbered "1". The table 63h is an example in which all the three consecutive CX gates are each implemented by the equivalent circuit numbered "1".

As seen in the tables 63a and 63h, in the case where the three consecutive CX gates are each implemented by the same equivalent circuit, the impact of over-rotation noise remains significant. By contrast, as seen in the tables 63b to 63g, in the case where the equivalent circuit numbered "0" and the equivalent circuit numbered "1" are combined for implementation, the impact of over-rotation noise is significantly reduced.

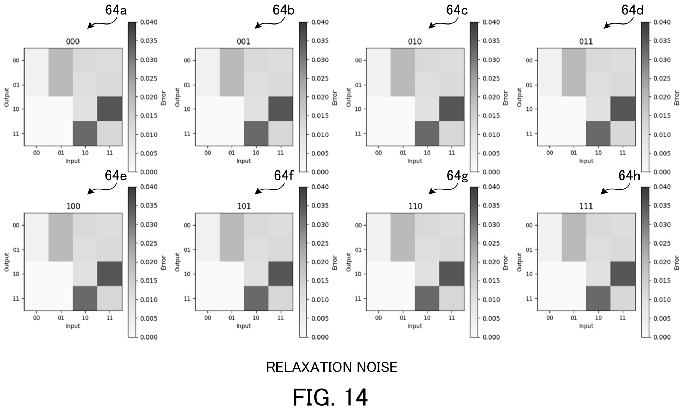

FIG. 14 illustrates error occurrence patterns in the case where only relaxation noise occurs. Tables 64a to 64h represent the magnitudes of error after the gate operations of three consecutive CX gates in the case where an error due to only relaxation noise occurs in each of the CX gates. In the tables 64a to 64h, the horizontal axis represents the input states of the CX gates, and the vertical axis represents the output states of the CX gates. In the tables 64a to 64h, a darker region indicates a greater error in the case where the output state corresponding to that region is obtained in response to the input state corresponding to that region.

The table 64a is an example in which all the three consecutive CX gates are each implemented by the equivalent circuit numbered "0". The table 64b is an example in which the first two of the three consecutive CX gates are each implemented by the equivalent circuit numbered "0" and the last one is implemented by the equivalent circuit numbered "1". The table 64c is an example in which the first and last ones of the three consecutive CX gates are each implemented by the equivalent circuit numbered "0" and the middle one is implemented by the equivalent circuit numbered "1". The table 64d is an example in which the first one of the three consecutive CX gates is implemented by the equivalent circuit numbered "0" and the last two are each implemented by the equivalent circuit numbered "1". The table 64e is an example in which the last two of the three consecutive CX gates are each implemented by the equivalent circuit numbered "0" and the first one is implemented by the equivalent circuit numbered "1". The table 64f is an example in which the middle one of the three consecutive CX gates is implemented by the equivalent circuit numbered "0", and the first and last ones are each implemented by the equivalent circuit numbered "1". The table 64g is an example in which the last one of the three consecutive CX gates is implemented by the equivalent circuit numbered "0" and the first two are each implemented by the equivalent circuit numbered "1". The table 64h is an example in which all the three consecutive CX gates are each implemented by the equivalent circuit numbered "1".

As seen in the tables 64a to 64h, even when the consecutive CX gates are implemented by combining the equivalent circuit numbered "0" and the equivalent circuit numbered "1", the impact of the relaxation noise does not vary.

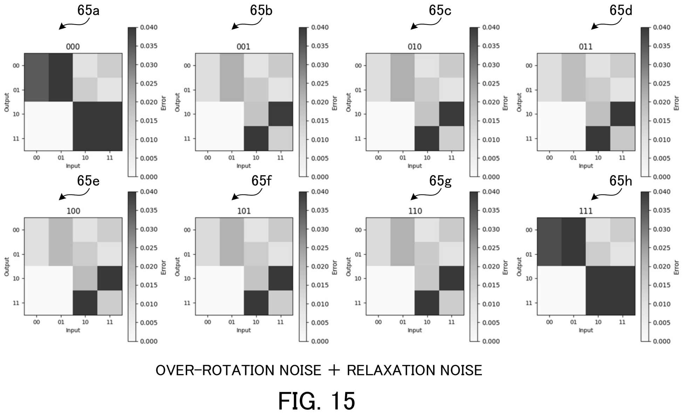

FIG. 15 illustrates error occurrence patterns in the case where both over-rotation noise and relaxation noise occur. Tables 65a to 65h represent the magnitudes of error after the gate operations of three consecutive CX gates when an error due to over-rotation noise and relaxation noise occurs in each of the CX gates. In the tables 65a to 65h, the horizontal axis represents the input states of the CX gates, and the vertical axis represents the output states of the CX gates. In the tables 65a to 65h, a darker region indicates a greater error in the case where the output state corresponding to that region is obtained in response to the input state corresponding to that region.

The table 65a is an example in which all the three consecutive CX gates are each implemented by the equivalent circuit numbered "0". The table 65b is an example in which the first two of the three consecutive CX gates are each implemented by the equivalent circuit numbered "0" and the last one is implemented by the equivalent circuit numbered "1". The table 65c is an example in which the first and last ones of the three consecutive CX gates are each implemented by the equivalent circuit numbered "0" and the middle one is implemented by the equivalent circuit numbered "1". The table 65d is an example in which the first one of the three consecutive CX gates is implemented by the equivalent circuit numbered "0" and the last two are each implemented by the equivalent circuit numbered "1". The table 65e is an example in which the last two of the three consecutive CX gates are each implemented by the equivalent circuit numbered "0" and the first one is implemented by the equivalent circuit numbered "1". The table 65f is an example in which the middle one of the three consecutive CX gates is implemented by the equivalent circuit numbered "0" and the first and last ones are each implemented by the equivalent circuit numbered "1". The table 65g is an example in which the last one of the three consecutive CX gates is implemented by the equivalent circuit numbered "0" and the first two are each implemented by the equivalent circuit numbered "1". The table 65h is an example in which all the three consecutive CX gates are each implemented by the equivalent circuit numbered "1".

As seen in the tables 65a and 65h, in the case where the three consecutive CX gates are each implemented by the same equivalent circuit, the impact of over-rotation noise remains significant. By contrast, as seen in the tables 65b to 65g, in the case where the three consecutive CX gates are implemented by a combination of the equivalent circuit numbered "0" and the equivalent circuit numbered "1", the impact of the over-rotation noise is significantly reduced, and the impact of the relaxation noise remains.

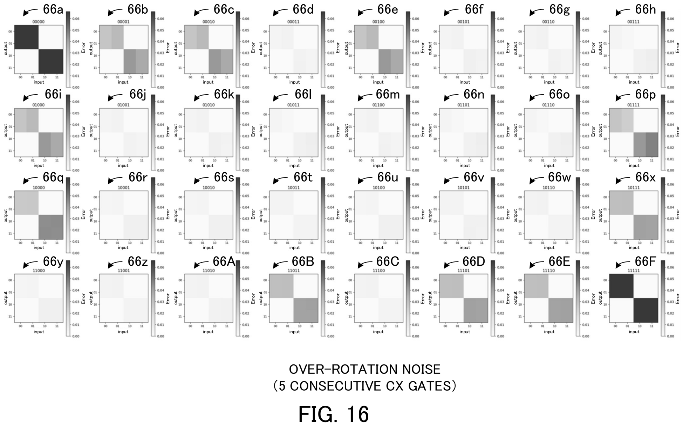

FIG. 16 illustrates error occurrence patterns in the case where five CX gates are consecutive. Tables 66a to 66z and 66A to 66F each represent an error occurrence pattern in the case where only over-rotation noise occurs in the gate operations of the five consecutive CX gates. In the tables 66a to 66z and 66A to 66F, the horizontal axis represents the input states of the CX gates, and the vertical axis represents the output states of the CX gates. In the tables 66a to 66z and 66A to 66F, a darker region indicates a greater error in the case where the output state corresponding to that region is obtained in response to the input state corresponding to that region.

The table 66a is an example in which all the five consecutive CX gates are each implemented by the equivalent circuit numbered "0". The tables 66b, 66c, 66e, 66i, and 66q are examples in which four of the five consecutive CX gates are each implemented by the equivalent circuit numbered "0" and the other one is implemented by the equivalent circuit numbered "1". The tables 66d, 66f, 66g, 66j, 66k, 66m, 66r, 66s, 66u, and 66y are examples in which three of the five consecutive CX gates are each implemented by the equivalent circuits numbered "0" and the other two are each implemented by the equivalent circuits numbered "1". The tables 66h, 66l, 66n, 66o, 66t, 66v, 66w, 66z, 66A, and 66C are examples in which two of the five consecutive CX gates are each implemented by the equivalent circuit numbered "0" and the other three are each implemented by the equivalent circuit numbered "1". The tables 66p, 66x, 66B, 66D, and 66E are examples in which one of the five consecutive CX gates is implemented by the equivalent circuit numbered "0" and the other four are each implemented by the equivalent circuit numbered "1". The table 66F is an example in which all the five consecutive CX gates are each implemented by the equivalent circuit numbered "1".

As seen in the tables 66a and 66F, in the case where the five consecutive CX gates are each implemented by the same equivalent circuit, an error due to the impact of over-rotation noise remains significant. As seen in the tables 66b, 66c, 66e, 66i, 66p, 66q, 66x, 66B, 66D, and 66E, in the case where the difference between the number of CX gates implemented by the equivalent circuits numbered "0" and the number of CX gates implemented by the equivalent circuits numbered "1" is large, an error due to the impact of over-rotation noise still remains. As in the other cases, in the case where the difference between the number of CX gates implemented by the equivalent circuits numbered "0" and the number of CX gates implemented by the equivalent circuits numbered "1" is "1" (the number of equivalent circuits of one type is "n//2" and the number of equivalent circuits of the other type is "n//2 + 1"), an error due to the impact of over-rotation noise is significantly reduced.

As described above, in the quantum computing system 300, the impact of over-rotation noise is canceled, which reduces the impact of coherent noise. As a result, it becomes possible to selectively amplify noise other than over-rotation, which improves the calculation accuracy of a physical quantity using ZNE.

[Other Embodiments]

The above examples describe equivalent circuits using $R_{ZX}$ gates as the equivalent circuits of a CX gate. Alternatively, any quantum gates other than the $R_{ZX}$ gates may be used as long as equivalent circuits having different global phases are formed.

In addition, the above examples describe the quantum computer 200 that is of a superconducting type and that is capable of executing $R_{ZX}$ gates as native gates. Alternatively, a quantum computer 200 of a type different from the superconducting type may be used as long as it is able to execute $R_{ZX}$ gates.

According to one aspect, it becomes possible to amplify noise according to the number of quantum gates.

Although the embodiments have been described above, the configuration of each unit described in the embodiments may be replaced with another unit having the same function. In addition, any other components or processes may be added. Furthermore, any two or more configurations (features) of the above-described embodiments may be combined.

**Claims**

1.   A computer program that causes a computer to perform a process comprising:

generating a second quantum circuit (3a to 3c) by converting a first two-qubit gate (2a) included in a first quantum circuit (2) into a two-qubit gate sequence (4a to 4c) in which a gate operation of the first two-qubit gate (2a) is repeated a predetermined number of times consecutively;

generating a third quantum circuit (6a to 6c) by converting a second two-qubit gate, which forms a part of the two-qubit gate sequence (4a to 4c) included in the second quantum circuit (3a to 3c), into a first equivalent circuit (5a) representing a gate operation with a first global phase and converting a third two-qubit gate, which is different from the second two-qubit gate and forms a part of the two-qubit gate sequence (4a to 4c), into a second equivalent circuit (5b) representing a gate operation with a second global phase different from the first global phase; and

causing a quantum computer (1) to execute the third quantum circuit (6a to 6c).

2. The computer program according to claim 1, wherein the process further includes determining a physical quantity in absence of noise using an extrapolation technique, based on an execution result of the third quantum circuit (6a to 6c) by the quantum computer (1).

3. The computer program according to claim 2, wherein

the process includes, for each of a plurality of numerical values each indicating the predetermined number of times for repeating the gate operation of the first two-qubit gate (2a), generating the second quantum circuit (3a to 3c), generating the third quantum circuit (6a to 6c), and causing the quantum computer (1) to execute the third quantum circuit (6a to 6c), and

the determining of the physical quantity includes determining the physical quantity in the absence of noise using the extrapolation technique, based on execution results of the third quantum circuit (6a to 6c) obtained respectively for the plurality of numerical values.

4. The computer program according to claim 3, wherein the generating of the second quantum circuit (3a to 3c) includes setting each of the plurality of numerical values, each indicating the predetermined number of times, to an odd number greater than or equal to 1.

5. The computer program according to any preceding claim, wherein the generating of the second quantum circuit (3a to 3c) includes converting each two-qubit gate included in the first quantum circuit (2) into an equivalent circuit using a controlled NOT gate, and taking, as the first two-qubit gate, the controlled NOT gate included in the first quantum circuit (2) after the converting.

6. The computer program according to any preceding claim, wherein the generating of the third quantum circuit (6a to 6c) includes converting the second two-qubit gate into the first equivalent circuit (5a) using a first echoed cross-resonance (ECR) gate with rotation angle of 90 degrees, and converting the third two-qubit gate into the second equivalent circuit (5b) using a second ECR gate with rotation angle of -90 degrees.

7. The computer program according to claim 6, wherein the generating of the third quantum circuit (6a to 6c) includes forming the second ECR gate by using a third ECR gate with rotation angle of 90 degrees, which acts on two qubits, and Z gates arranged before and after the third ECR gate on each of the two qubits.

8. The computer program according to any preceding claim, wherein the generating of the third quantum circuit (6a to 6c) includes converting each of q second two-qubit gates into the first equivalent circuit (5a) and converting each of q+1 third two-qubit gates into the second equivalent circuit (5b), where n denotes a number of two-qubit gates in the two-qubit gate sequence, and q denotes an integer quotient obtained by dividing n by 2, n being an odd number greater than or equal to 1, q being an integer greater than or equal to 0.

9. A quantum computation support method executed by a computer, the quantum computation support method comprising:

generating a second quantum circuit (3a to 3c) by converting a first two-qubit gate (2a) included in a first quantum circuit (2) into a two-qubit gate sequence (4a to 4c) in which a gate operation of the first two-qubit gate (2a) is repeated a predetermined number of times consecutively;

generating a third quantum circuit (6a to 6c) by converting a second two-qubit gate, which forms a part of the two-qubit gate sequence (4a to 4c) included in the second quantum circuit (3a to 3c), into a first equivalent circuit (5a) representing a gate operation with a first global phase and converting a third two-qubit gate, which is different from the second two-qubit gate and forms a part of the two-qubit gate sequence (4a to 4c), into a second equivalent circuit (5b) representing a gate operation with a second global phase different from the first global phase; and

causing a quantum computer (1) to execute the third quantum circuit (6a to 6c).

10. An information processing apparatus (10) comprising:
processing means (12) for:

generating a second quantum circuit (3a to 3c) by converting a first two-qubit gate (2a) included in a first quantum circuit (2) into a two-qubit gate sequence (4a to 4c) in which a gate operation of the first two-qubit gate (2a) is repeated a predetermined number of times consecutively;
generating a third quantum circuit (6a to 6c) by converting a second two-qubit gate, which forms a part of the two-qubit gate sequence (4a to 4c) included in the second quantum circuit (3a to 3c), into a first equivalent circuit (5a) representing a gate operation with a first global phase and converting a third two-qubit gate, which is different from the second two-qubit gate and forms a part of the two-qubit gate sequence (4a to 4c), into a second equivalent circuit (5b) representing a gate operation with a second global phase different from the first global phase; and
causing a quantum computer (1) to execute the third quantum circuit (6a to 6c).

FIG. 1

FIG. 2

21 MONITOR

100
CLASSICAL COMPUTER

104

101

PROCESSOR

GRAPHIC
CONTROLLER

22 KEYBOARD

105

102

MEMORY

INPUT
INTERFACE

23 MOUSE

103

STORAGE
DEVICE

OPTICAL
DRIVE DEVICE

106

24 OPTICAL DISC

108

NETWORK
INTERFACE

DEVICE
CONNECTION
INTERFACE

107

25 MEMORY DEVICE

100a
BUS

COMMUNI-
CATION
INTERFACE

109

26
MEMORY
READER/WRITER

27
MEMORY CARD

20

NETWORK

200

QUANTUM
COMPUTER

201

CONTROL
DEVICE

202

QUBIT
DEVICE

FIG. 3

ERROR $\varepsilon_0$

$\langle O \rangle (\varepsilon_0)$

100

ERROR $\lambda \varepsilon_0$

$\langle O \rangle (\lambda \varepsilon_0)$

PHYSICAL
QUANTITY

CALCULATION
RESULT

91

$\langle O \rangle (\varepsilon_0)$

$\langle O \rangle (\lambda \varepsilon_0)$

$\varepsilon_0$

$\lambda \varepsilon_0$

ERROR RATE

FIG. 4

GLOBAL PHASE

$$|\psi\rangle = e^{i\gamma}\left(cos\frac{\theta}{2}|0\rangle + e^{i\varphi}sin\frac{\theta}{2}|1\rangle\right)$$

31  BLOCH SPHERE

FIG. 5

33

32                                    33a          33b

q₀ ————●————            q₀ ——| 0        |——| R_Z  |——
        |                        |  R_ZX  |  | −90  |
q₁ ————⊕————            q₁ ——| 1   90  |——| R_X  |——
                                |        |  | −90  |
CX GATE                    NUMBERED "0"
                                              33c

$$\begin{bmatrix} 1 & 0 & 0 & 0 \\ 0 & 1 & 0 & 0 \\ 0 & 0 & 0 & 1 \\ 0 & 0 & 1 & 0 \end{bmatrix}$$

$$e^{-\frac{i\pi}{4}}\begin{bmatrix} 1 & 0 & 0 & 0 \\ 0 & 1 & 0 & 0 \\ 0 & 0 & 0 & 1 \\ 0 & 0 & 1 & 0 \end{bmatrix}$$

34

34a          34b

q₀ ——| 0        |——| R_Z |——
       |  R_ZX  |  |  90 |
q₁ ——| 1  −90  |——| R_X |——
       |        |  |  90 |
       NUMBERED "1"
                     34c

FIG. 6

$$ie^{-\frac{i\pi}{4}}\begin{bmatrix} 1 & 0 & 0 & 0 \\ 0 & 1 & 0 & 0 \\ 0 & 0 & 0 & 1 \\ 0 & 0 & 1 & 0 \end{bmatrix}$$

$$R_{ZX}(\theta) = \begin{bmatrix} \cos\left(\dfrac{\theta}{2}\right) & -i\,\sin\left(\dfrac{\theta}{2}\right) & 0 & 0 \\[2ex] -i\,\sin\left(\dfrac{\theta}{2}\right) & \cos\left(\dfrac{\theta}{2}\right) & 0 & 0 \\[2ex] 0 & 0 & \cos\left(\dfrac{\theta}{2}\right) & i\,\sin\left(\dfrac{\theta}{2}\right) \\[2ex] 0 & 0 & i\,\sin\left(\dfrac{\theta}{2}\right) & \cos\left(\dfrac{\theta}{2}\right) \end{bmatrix}$$

$$\frac{1}{\sqrt{2}}\begin{bmatrix} 1 & -i & 0 & 0 \\ -i & 1 & 0 & 0 \\ 0 & 0 & 1 & i \\ 0 & 0 & i & 1 \end{bmatrix}$$

$$\frac{1}{\sqrt{2}}\begin{bmatrix} 1 & i & 0 & 0 \\ i & 1 & 0 & 0 \\ 0 & 0 & 1 & -i \\ 0 & 0 & -i & 1 \end{bmatrix}$$

FIG. 7

FIG. 8

FIG. 9

TERMINAL
DEVICE

30

100 CLASSICAL COMPUTER

110

COMPUTATION
REQUEST
RECEIVING UNIT

120

QUANTUM CIRCUIT
GENERATION UNIT

130

QUANTUM
COMPUTATION
CONTROL UNIT

200

QUANTUM COMPUTER

FIG. 10

START

GENERATE QUANTUM CIRCUIT — S101

CONVERT ALL ENTANGLEMENT GATES INTO CX GATES — S102

DETERMINE NUMERICAL SEQUENCE (1, 3, 5) FOR THE NUMBER n (ODD NUMBER) OF CONSECUTIVE CX GATES IN ZNE — S103

SET n TO INITIAL VALUE (n = 1) — S104

n ≤ MAXIMUM VALUE OF n? — S105

NO

YES

CONVERT CX GATE INTO n CONSECUTIVE CX GATES — S106

CALCULATE PHYSICAL QUANTITY IN ABSENCE OF ERROR USING EXTRAPOLATION TECHNIQUE — S111

CONVERT EACH OF n//2 CX GATES INTO EQUIVALENT CIRCUIT USING $R_{ZX}(90)$ — S107

END

CONVERT EACH OF n//2+1 CX GATES INTO EQUIVALENT CIRCUIT USING $R_{ZX}(-90)$ — S108

INSTRUCT QUANTUM COMPUTER TO EXECUTE QUANTUM CIRCUIT — S109

UPDATE n (n = n + 2) — S110

FIG. 11

26

FIG. 12

FIG. 13

RELAXATION NOISE

FIG. 14

OVER-ROTATION NOISE + RELAXATION NOISE

FIG. 15

OVER-ROTATION NOISE
(5 CONSECUTIVE CX GATES)

FIG. 16

# EP 4 756 680 A1

| Europäisches Patentamt / European Patent Office / Office européen des brevets | **EUROPEAN SEARCH REPORT** | **Application Number** |
|---|---|---|
| | | **EP 25 21 3221** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/116344 A1 (FUJITSU LTD [JP]) 6 June 2024 (2024-06-06) | 1,5-10 | INV. G06N10/20 G06N10/70 |
| A | * page 1 - page 28 * * claims 1-8; figures 1-16 * ----- | 2-4 | |
| A | Kurita Tomochika ET AL: "Synergetic quantum error mitigation by randomized compiling and zero-noise extrapolation for the variational quantum eigensolver", arXiv.org, 13 November 2023 (2023-11-13), XP093369944, DOI: 10.48550/arxiv.2212.11198 Retrieved from the Internet: URL:https://arxiv.org/pdf/2212.11198 [retrieved on 2026-02-25] * page 1 - page 10, paragraph 2 * ----- | 1-10 | |

**TECHNICAL FIELDS SEARCHED (IPC)**

G06N

The present search report has been drawn up for all claims

| Place of search | Date of completion of the search | Examiner |
|---|---|---|
| The Hague | 25 February 2026 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 3221

This annex lists the patent family members relating to the patent documents cited in  the above-mentioned European search report.
The members are as contained in the European Patent Office EDP file on
The European Patent Office is in no way liable for these particulars which are merely given for the purpose of information.

25-02-2026

| Patent document cited in search report | Publication date | Patent family member(s) | Publication date |
|---|---|---|---|
| WO 2024116344 A1 | 06-06-2024 | EP 4629140 A1 | 08-10-2025 |
|  |  | JP WO2024116344 A1 | 06-06-2024 |
|  |  | WO 2024116344 A1 | 06-06-2024 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023501752 A
- JP 2024001778 A

- US 20220197764
- US 10852346 B

**Non-patent literature cited in the description**

- **TOMOCHIKA KURITA** ; **HAMMAM QASSIM** ; **MASATOSHI ISHII** ; **HIROTAKA OSHIMA** ; **SHINTARO SATO** ; **JOSEPH EMERSON**. Synergetic quantum error mitigation by randomized compiling and zero-noise extrapolation for the variational quantum eigensolver. *Quantum*, 20 November 2023, vol. 7, 1184